# FASCICULE DE BREVET EUROPEEN

(11) **EP 3 608 649 B1**
(45) Date de publication et mention de la délivrance du brevet: **17.02.2021**
(21) Numéro de dépôt: 19190151.1
(22) Date de dépôt: 06.08.2019
(51) Int. Cl.: G01M 15/02, G01M 15/14, B64F 5/60, F01D 25/28

(54) **PYLONE DE SUPPORT D'UNE TURBOMACHINE D'AERONEF**
STÜTZMAST EINES TURBOTRIEBWERKS EINES LUFTFAHRZEUGS
SUPPORT PYLON FOR AN AIRCRAFT TURBINE ENGINE

(30) Priorité: 09.08.2018 FR 1857409
(43) Date de publication de la demande: 12.02.2020
(73) Titulaire: SAFRAN AIRCRAFT ENGINES, 75015 Paris (FR)
(72) Inventeur: DERENES, Jacky, Raphaël, Michel, 77550 Moissy-Cramayel (FR); BERTIN, Michael, Daniel, Joël, 77550 Moissy-Cramayel (FR); GRENIER, Etienne, Romain, Pascal, 77550 Moissy-Cramayel (FR)
(74) Mandataire: Gevers & Orès

(56) Documents cités:
- WO-A1-2010/122052
- CN-U- 207 487 978
- FR-A1- 3 044 093
- US-B1- 8 161 806

## Description

### DOMAINE TECHNIQUE

La présente invention concerne un pylône de support d'une turbomachine d'aéronef, en particulier pour un banc d'essai. Elle concerne plus particulièrement le raccordement de conduites de fluide(s) de ce pylône à la turbomachine.

### ETAT DE L'ART

Les turbomachines nécessitent pour leur mise au point ou pour la vérification de leurs performances en sortie de maintenance, et afin d'être testées avant d'être mises en vol, un passage sur des installations au sol, dénommées bancs d'essai. Ces bancs d'essai permettent de faire fonctionner les turbomachines comme si elles étaient installées sur un aéronef. Ces bancs sont en général des installations en maçonnerie dans lesquelles est installé un pylône fixe comportant au moins une conduite de fluide tel que du gaz configurée pour pouvoir être raccordée à une conduite de la turbomachine à tester.

Les documents FR 3 044 093 A1, CN 207 487 978 U et US 8 161 806 B1 montrent des exemples de bancs d'essai permettant de tester une turbomachine d'aéronef.

Les conduites de fluide du pylône sont rigides au moins dans une portion de raccordement à la conduite de la turbomachine. De la sorte, lors de l'accostage de la turbomachine qui est lourde et difficile à manier, il y a un risque de détériorer la turbomachine dans sa portion de raccordement au pylône.

L'invention propose une solution simple, efficace et économique à ce problème.

### EXPOSE DE L'INVENTION

A cet effet, l'invention concerne un pylône de support d'une turbomachine d'aéronef, en particulier pour un banc d'essai, le pylône ayant une forme générale allongée le long d'un axe et comportant, à une première extrémité longitudinale, des premiers organes de fixation à une turbomachine et, à une seconde extrémité longitudinale, des seconds organes de fixation à une embase, le pylône étant traversé par au moins une conduite de fluide comportant une première extrémité de raccordement à la turbomachine et une seconde extrémité de raccordement à un circuit d'alimentation en fluide, caractérisé en ce que ladite au moins une conduite comprend une portion mobile en translation le long dudit axe de façon à pouvoir ajuster la position le long dudit axe de ladite première extrémité de raccordement par rapport à ladite première extrémité longitudinale.

Ainsi, il est possible de raccorder la conduite de fluide à la turbomachine, sans risque de détériorer cette dernière. En effet, la portion mobile et par conséquent la partie rigide de la conduite est déplacée en translation le long dudit axe. Il est alors possible de faire varier la position de la première extrémité de raccordement de la conduite à la turbomachine entre une première position, dite par exemple position haute, et une seconde position dite par exemple position basse. Dans la position haute, la première extrémité de raccordement de la conduite à la turbomachine est dans une position autorisant son raccordement à une conduite analogue de la turbomachine. Autrement dit, ladite première extrémité de raccordement est située à une première distance prédéterminée de ladite première extrémité longitudinale. Dans la position basse, la première extrémité de raccordement de la conduite à la turbomachine est en retrait, à une distance prédéterminée, par rapport à la première extrémité longitudinale du pylône. Autrement dit, ladite première extrémité de raccordement est située à une seconde distance prédéterminée de ladite première extrémité longitudinale, ladite première distance prédéterminée étant supérieure à ladite seconde distance prédéterminée.

De préférence, ladite au moins une conduite comprend une portion flexible située, par exemple, au niveau de la seconde extrémité de raccordement à l'embase.

Avantageusement, ladite portion mobile traverse un orifice d'une platine sensiblement perpendiculaire audit axe et porte deux bagues fixes dont une première est située d'un coté de la platine et forme une butée et dont une seconde est située de l'autre coté de la platine, un ressort de compression prenant appui sur la seconde bague et sur la platine pour solliciter l'éloignement de la seconde bague de la platine.

Ainsi, la solution permet de maintenir les conduites dans une position haute et autorise une liberté de déplacements intrinsèques de la conduite dus par exemple à une dilatation thermique ou à des vibrations.

Avantageusement, la platine est reliée à un corps de pylône par des moyens de guidage en translation le long dudit axe.

Ainsi, les mouvements d'ajustement de la portion mobile de ladite conduite est guidée sensiblement le long dudit axe.

Avantageusement, les moyens de guidage en translation comportent deux tiges télescopiques dont les extrémités sont respectivement fixées à la platine et au corps du pylône.

Selon un autre mode de réalisation, les moyens de guidage en translation comportent au moins une vis sans fin.

Ainsi, il est possible de sélectionner la position de la portion mobile parmi une pluralité de positions le long de la vis sans fin.

De préférence, la platine est reliée à ou comprend au moins une poignée de déplacement de la platine et donc d'ajustement de la position de la portion mobile.

Ainsi, le déplacement et l'ajustement de la portion mobile de ladite conduite sont facilités.

Avantageusement, le pylône comprend plusieurs conduites de fluide et la platine comprend plusieurs orifices traversés par lesdites conduites.

Ainsi, il est possible de déplacer simultanément les portions mobiles de plusieurs conduites.

Avantageusement, le pylône comprend des moyens de verrouillage de ladite portion mobile dans au moins une position le long dudit axe.

Ainsi, il est aisé et rapide de passer d'une position haute à une position basse lors de l'ajustement de la position de la portion mobile des conduites.

La présente invention a encore pour objet un procédé de montage d'une turbomachine d'aéronef sur un pylône comportant au moins une caractéristique susmentionnée, comprenant :
a) une étape de déplacement de la portion mobile des conduites en direction de la seconde extrémité longitudinale du pylône de façon à ce que la première extrémité de raccordement soit située à une première distance prédéterminée de la première extrémité longitudinale du pylône,
b) une étape d'accostage de la turbomachine sur ladite première extrémité longitudinale,
c) une étape de déplacement de la portion mobile des conduites en direction de la première extrémité longitudinale du pylône de façon à ce que la première extrémité de raccordement soit située à une seconde distance prédéterminée de la première extrémité longitudinale, ladite première distance prédéterminée étant supérieure à ladite seconde distance prédéterminée, et
d) une étape de raccordement de ladite au moins une conduite à la turbomachine,
la turbomachine étant fixée au pylône avant l'étape c) ou après l'étape c) ou d).

Ce procédé permet d'accoster une turbomachine d'aéronef sur un pylône sans risque de détérioration de ladite turbomachine dans sa portion de raccordement audit pylône.

### DESCRIPTION DES FIGURES

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
la figure 1 est une vue d'ensemble de coté illustrant une turbomachine positionnée sur un pylône selon l'invention ;
la figure 2 est une vue de face de la turbomachine et du pylône selon l'invention ;
la figure 3 montre une vue de détail en perspective des éléments du pylône permettant l'ajustement de la position de la portion mobile des conduites selon l'invention ;
la figure 4 montre une vue partielle en coupe selon l'axe A-A ;
la figure 5a est une vue de détail montrant schématiquement les positions des premières extrémités de raccordement des conduites à une première distance prédéterminée D₁ de la première extrémité longitudinale du pylône ;
la figure 5b est une vue de détail montrant schématiquement les positions des premières extrémités de raccordement des conduites à une seconde distance prédéterminée D₂ de la première extrémité longitudinale du pylône ;
la figure 6 est une vue partielle de détail en perspective éclatée d'éléments permettant l'ajustement de la position de la portion mobile des conduites du pylône selon l'invention ;
la figure 7 est une vue de détail en coupe longitudinale d'un axe de guidage permettant l'ajustement de la position de la portion mobile des conduites du pylône selon l'invention ;
la figure 8 est une vue de détail en perspective montrant des trappes d'accès ménagées dans le corps du pylône selon l'invention.

### DESCRIPTION DETAILLEE

Dans le présent exposé, les termes « inférieur », « supérieur, « proximale », « distale », « haut » et « bas » sont utilisés en référence au positionnement usuels des éléments constitutifs du pylône selon l'invention, les termes « proximale », « inférieure » et « bas » s'entendant comme étant au plus proche de l'embase tandis que les termes « distale », « supérieur » et « haut » s'entendant comme étant au plus proche de la turbomachine accostée au pylône selon l'invention.

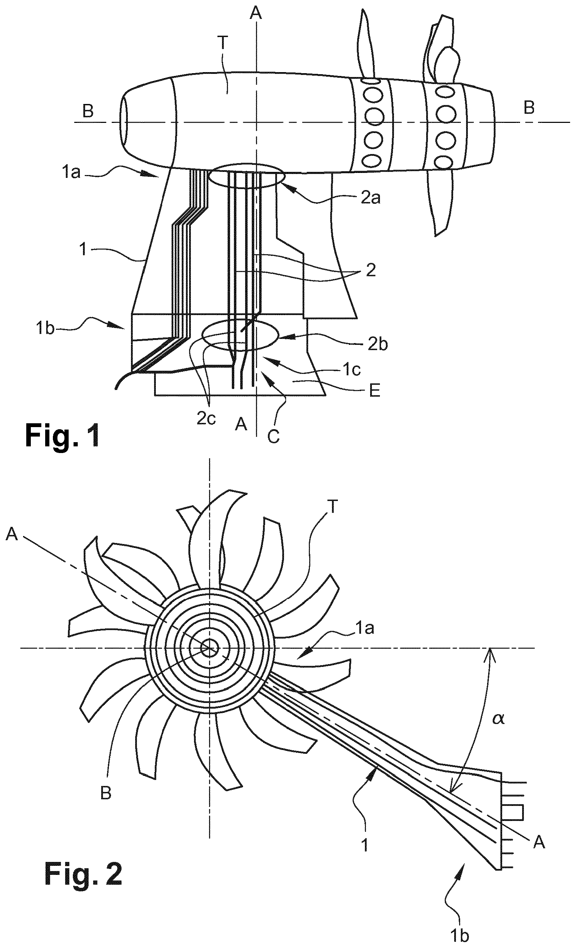

Les figures 1 et 2 illustrent un pylône 1 de support d'une turbomachine T d'aéronef selon l'invention. Ce pylône 1, en particulier pour un banc d'essai, est surmonté d'une turbomachine T et présente une forme générale allongée le long d'un axe A-A. A une première extrémité longitudinale 1a ou extrémité distale 1a, le pylône comporte des premiers organes de fixation à une turbomachine T, la turbomachine T comportant, dans une zone de raccordement au pylône 1, des organes complémentaires de fixation au pylône. A une seconde extrémité longitudinale 1b ou extrémité proximale 1b, le pylône comporte des seconds organes de fixation à une embase E elle-même fixée au sol ou à une paroi d'une installation en maçonnerie comportant le pylône 1. L'embase E comporte, dans une zone de raccordement au pylône 1, des organes complémentaires de fixation au pylône.

La turbomachine T présente un axe longitudinal B-B sensiblement perpendiculaire à l'axe A-A lorsque la turbomachine T est accostée sur le pylône 1. L'axe A-A du pylône forme un angle α par rapport à un plan horizontal passant par un plan radial de la turbomachine T, par exemple un angle α compris entre 30° et 40°, reproduisant l'inclinaison d'un pylône d'aéronef.

Le pylône 1 est par exemple tubulaire et est traversé, longitudinalement, par au moins une conduite 2 et, comme illustré dans la présente demande, par plusieurs conduites 2 de fluides et câbles nécessaires pour la réalisation de tests de la turbomachine sur banc d'essai. Notamment, le pylône 1 comporte au moins une conduite 2 de fluide comportant une première extrémité 2a de raccordement à la turbomachine T et une seconde extrémité 2b de raccordement à un circuit C d'alimentation en fluide. Selon l'exemple illustré, le pylône 1 comporte au moins quatre conduites 2 de fluide, permettant par exemple de faire circuler des fluides, tel que du gaz, entre l'embase E et la turbomachine T.

La ou chaque conduite 2 de fluide du pylône 1 comprend une portion 2' mobile en translation le long de l'axe A-A de façon à pouvoir ajuster la position de la première extrémité 2a de raccordement par rapport à la première extrémité longitudinale 1 a du pylône 1, le long de l'axe A-A.

La portion 2' mobile en translation est constituée par une portion rigide des conduites 2.

L'ajustement de la position de la portion mobile 2' et, par conséquent, l'ajustement de la position de la première extrémité 2a de raccordement des conduites 2 est rendu possible, selon l'exemple de réalisation illustré nullement limitatif, par une portion flexible 2c des conduites 2. Une autre solution envisageable serait par exemple d'utiliser des conduites 2 ayant une portion télescopique.

Cet agencement permet le retrait de la ou des conduites 2 au niveau de l'extrémité distale 1a du pylône 1, autrement dit il permet l'éloignement ou écartement temporaire de la première extrémité 2a de raccordement de chaque conduites 2 de la première extrémité longitudinale 1a du pylône 1, par exemple pendant la phase d'accostage de la turbomachine T au pylône 1.

Selon l'exemple de réalisation, nullement limitatif, illustré dans la présente demande, la portion flexible 2c permettant l'ajustement de la position de la portion mobile 2' de chaque conduite 2 est située au niveau de la seconde extrémité 2b de raccordement à l'embase E. Cette portion flexible pourrait être aménagée n'importe où, le long de chaque conduite 2.

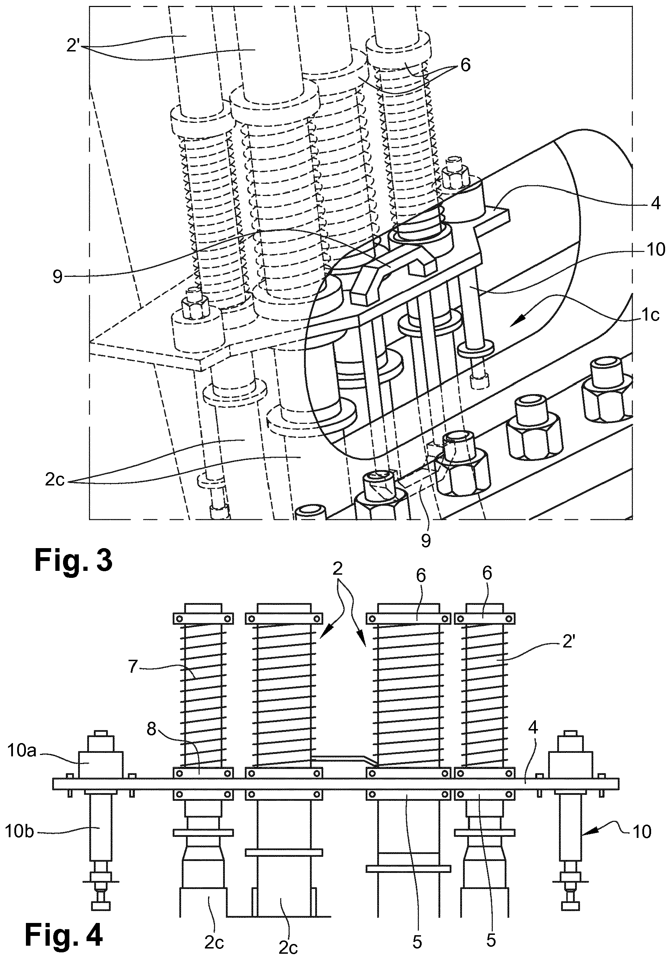

En référence aux figures 3 à 6, la portion mobile 2' de chaque conduite 2 traverse un orifice 3 d'une platine 4, cette dernière s'étendant sensiblement perpendiculairement à l'axe A-A du pylône 1.

La portion mobile 2' de chaque conduite 2 porte deux bagues fixes 5, 6. Une première bague 5 est située d'un coté inférieur de la platine 4 et forme une butée et une seconde 6 est située de l'autre coté de la platine 4, un ressort de compression 7 prenant appui sur la seconde bague 6 et sur la platine 4 pour solliciter l'éloignement de la seconde bague 6 de la platine 4. Par exemple, le ressort de compression 7 prend appui sur la platine 4 par l'intermédiaire d'une troisième bague 8 située d'un coté supérieur de la platine 4.

Dans le cas où le pylône 1 comprend plusieurs conduites 2 de fluide, la platine 4 comprend plusieurs orifices 3 traversés par les conduites 2, de la sorte, il est possible de déplacer, simultanément, l'ensemble des conduites 2 afin d'ajuster la position de leur première extrémité 2a de raccordement respective simplifiant ainsi les opérations d'accostage d'une turbomachine T, sur un pylône, et, par conséquent, les opérations de maintenance ou de test sur la turbomachine T.

Selon l'exemple de réalisation illustré, la platine 4 est reliée à un corps 1c de pylône par des moyens de guidage en translation le long de l'axe A-A.

Selon l'exemple de réalisation illustré notamment aux figures 3 à 8, les moyens de guidage en translation comportent deux tiges télescopiques 10 dont les extrémités sont respectivement fixées à la platine 4 et au corps du pylône 1. Plus précisément, les tiges télescopiques 10 comportent, d'une part, un cylindre creux 10a solidaire de la platine 4 par exemple par l'intermédiaire de pattes de solidarisation 11 vissées dans la platine 4 et, d'autre part, une tige cylindrique 10b, solidaire du pylône 1 et configurée pour coulisser dans le cylindre creux 10a. De préférence, les deux tiges télescopiques 10 sont disposées sur une droite d située le long d'un axe longitudinal de la platine 4 et à deux extrémités opposées de cette platine.

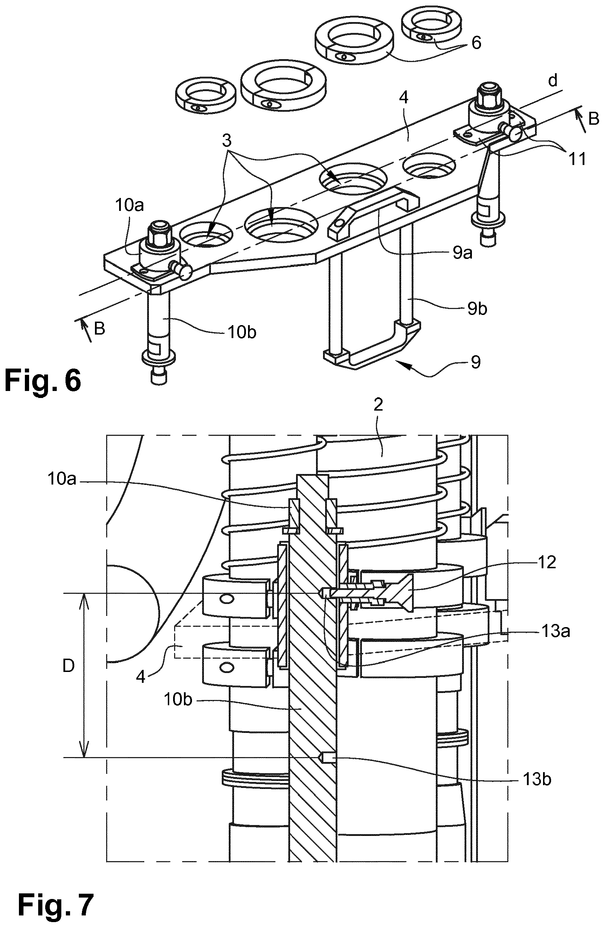

En référence à la figure 7, l'ajustement de la position de la portion mobile 2' de la ou des conduites 2 est réalisé entre une position haute permettant le raccordement des conduites 2 du pylône 1 à des conduites analogues de la turbomachine T et une position basse dans laquelle les portions mobiles 2' des conduites 2 sont en retrait par rapport à la première extrémité longitudinale 1a du pylône 1.

Le pylône 1 comporte encore des moyens de verrouillage de la position de la portion mobile 2' de la ou des conduites 2, dans au moins une position, par exemple position haute ou position basse.

Selon l'exemple de réalisation illustré, les moyens de verrouillage sont constitués par des pions 12 pouvant être engagés dans des encoches hautes 13a et basses 13b ménagées dans les tiges télescopiques 10 constituant les moyens de guidage, et notamment dans les tiges cylindriques 10b de ces dernières. Ces pions 12 sont rétractables et traversent un orifice ménagé dans une paroi périphérique du cylindre creux 10a. Les pions 12 verrouillent alors le positionnement des portions mobiles 2' des conduites 2 dans la position haute ou la position basse en s'engageant respectivement, dans les encoches hautes 13a ou les encoches basses 13b des tiges cylindriques 10b.

Par exemple, les positions haute et basse sont espacées d'une distance D suffisante pour permettre le retrait des portions mobiles 2', et, par conséquent, des premières extrémités 2a de raccordement des conduites 2 à la turbomachine T de sorte à assurer l'accostage sécurisé sans risque de détérioration de cette dernière. Par exemple les positions haute et basse, et par conséquent les encoches hautes 13a et basses 13b sont espacées de 100 mm.

Selon un autre exemple de réalisation non représenté, les moyens de guidage en translation comportent au moins une vis sans fin, de la sorte il est possible de sélectionner une pluralité de positions d'effacement des portions mobiles 2' des conduites 2.

Selon l'exemple de réalisation illustré à la figure 6, la platine 4 est reliée à ou comprend au moins une poignée 9 permettant le déplacement de la platine 4 et donc l'ajustement de la position de la portion mobile 2' de la ou des conduites 2. Cette poignée 9 présente une forme générale en forme de O et comprend une ou deux zones de préhension pouvant être saisies par un opérateur afin d'ajuster la position de la portion mobile 2' des conduites 2.

La poignée 9 s'étend dans un plan perpendiculaire à la platine 4 et est coupée par la platine 4 de façon à définir deux zones de préhension, à savoir une zone supérieure de préhension 9a et une zone inférieure de préhension 9b.

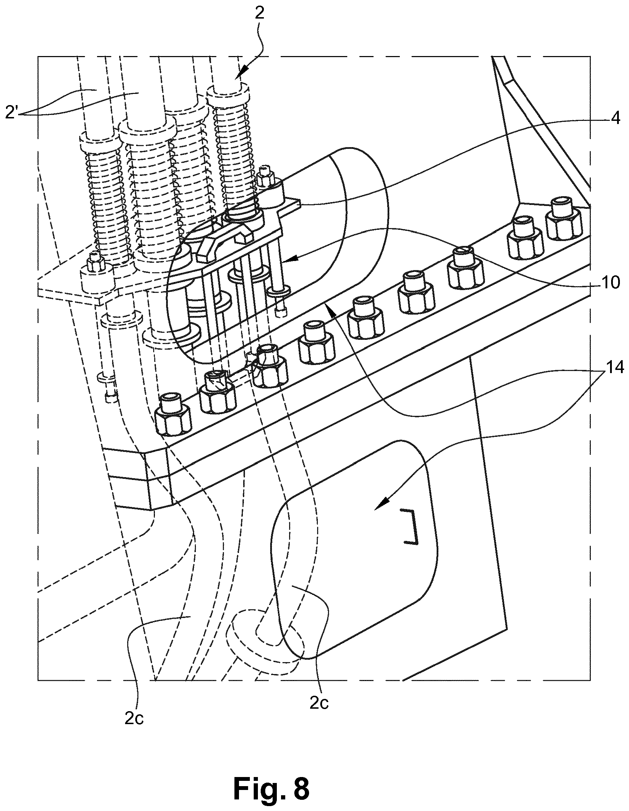

L'accès aux moyens de guidage en translation, et notamment à la poignée 9, est rendu possible par le ménagement d'au moins une trappe 14 dans le corps du pylône 1. Selon l'exemple de réalisation illustré à la figure 8, deux trappes 14 d'accès aux moyens de guidage en translation sont ménagées dans le corps du pylône 1 et permettent notamment la préhension de la poignée 9 afin de déplacer l'ensemble formé par la platine 4 et les portions mobiles 2' des conduites 2 entre une position haute et une position basse.

La présente invention concerne encore un procédé de montage d'une turbomachine T d'aéronef sur un pylône 1 tel que décrit dans le présent exposé et comportant au moins une conduite 2 de fluide.

Dans une position initiale de départ, les conduites 2 sont verrouillées dans une position haute dans laquelle les pions 12 sont engagés dans les encoches hautes 13a des tiges télescopiques 10.

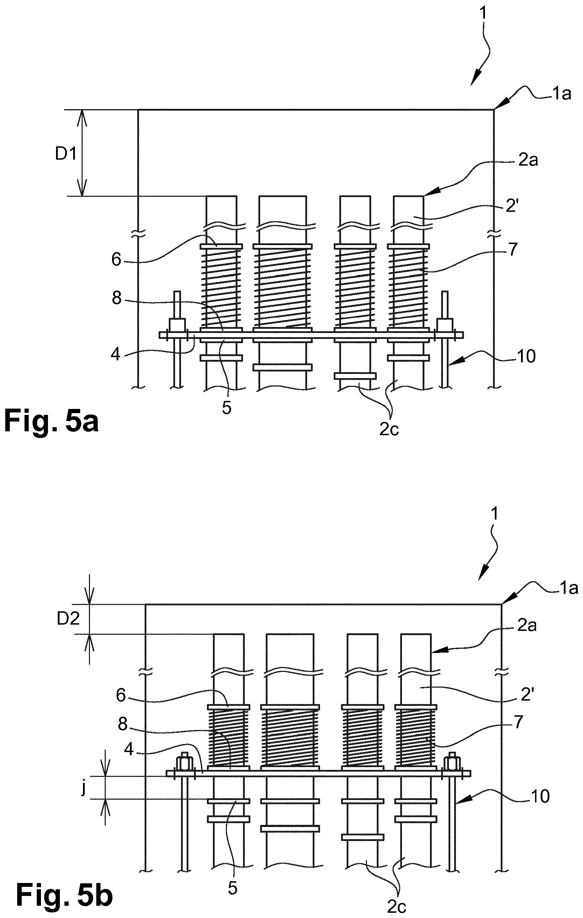

Dans une première étape a), la position de la portion mobile 2' de la au moins une conduite 2 est déplacée en direction de la seconde extrémité longitudinale 1b du pylône 1 de façon à ce que la première extrémité 2a de raccordement des conduites 2 soit située à une première distance prédéterminée D₁ de la première extrémité longitudinale 1a du pylône 1 (figure 5a). Pour cela, par exemple, les pions 12 sont dégagés des encoches hautes 13a et, par exemple par manœuvre sur la zone inférieure 9b de la poignée 9 à travers l'une des trappes 14, l'ensemble constitué de la platine 4 et des conduites 2 est déplacé vers le bas, jusqu'à amener les pions 12 en regard des encoches basses 13b.. Les pions 12 sont ensuite engagés dans ces encoches basses 13b de sorte à verrouiller l'ensemble constitué de la platine 4 et des conduites 2 dans la position basse. Ainsi, les portions mobiles 2' et, par conséquent, les premières extrémités 2a de raccordement des conduites 2 sont déplacées vers le bas et éloignées de l'extrémité distale 1a de raccordement du pylône à la turbomachine T. De la sorte, une turbomachine T peut être approchée du pylône 1 sans risque de détérioration de la turbomachine T par les premières extrémités 2a rigides de raccordement des conduites 2.

Dans une seconde étape b), la turbomachine T est accostée de manière connue en soi sur la première extrémité longitudinale 1a de raccordement du pylône 1 à la turbomachine.

Dans une troisième étape c), la portion mobile 2' des conduites 2 est déplacée en direction de la première extrémité longitudinale 1a du pylône 1 de façon à ce que la première extrémité 2a de raccordement des conduites 2 soit située à une seconde distance prédéterminée D₂ de la première extrémité longitudinale 1a du pylône 1 (Figure 5b). La première distance prédéterminée D₁ est supérieure à la seconde distance prédéterminée D₂ Pour cela, les pions 12 sont dégagés des encoches basses 13b et, par exemple par manœuvre sur la zone supérieure 9a de la poignée 9, l'ensemble constitué de la platine 4 et des conduites 2 est déplacé vers le haut, jusqu'à ramener les pions 12 en regard des encoches hautes 13a. Les pions 12 sont alors engagés dans ces encoches hautes 13a de sorte à verrouiller l'ensemble constitué de la platine 4 et des conduites 2 dans la position haute de départ.

Les bagues 5 et 6 sont fixes sur les conduites 2 et les ressorts de compression 7 prennent appui, d'une part, contre la bague 6 et, d'autre part, contre la platine 4, directement ou par l'intermédiaire des bagues 8. Ainsi, lors du déplacement des conduites 2 en direction de la première extrémité longitudinale 1a du pylône 1, les ressorts de compression 7 sont comprimés entre les bagues 6 et la platine 4 (ou les bagues 8 le cas échéant). Autrement dit, la distance séparant les bagues 6 de la platine 4 (ou des bagues 8, le cas échéant) lorsque les conduites 2 sont en position haute est inférieure à la distance séparant les bagues 6 de la platine 4 (ou des bagues 8, le cas échéant) lorsque les conduites 2 sont en position basse. Les ressorts de compression 7 exercent alors un effort tendant à éloigner les bagues 6 de la platine 4 (ou des bagues 8, le cas échéant).

Les ressorts de compression 7 permettent ainsi de maintenir les conduites 2 en position haute en prenant appui sur la platine 4, directement ou par l'intermédiaire des bagues 8. Autrement, les conduites 2 coulisseraient dans les orifices 3 vers le bas, notamment lors de la déconnection des raccordement entre les conduites 2 du pylône 1 de celles de la turbomachine T, générant des efforts néfastes sur les raccordements des conduites 2 du pylône 1 et de la turbomachine T.

De préférence et avantageusement, un jeu j est ménagé entre la bague 5 et la platine 4 lorsque les conduites 2 sont en position haute. Ce jeu j autorise les déplacements des conduites 2 induits par exemple par leur dilatation, le long de l'axe A-A. En effet, la platine 4 étant fixée au corps de pylône 1c par l'intermédiaire des tiges télescopiques 10, il est nécessaire de prendre en compte les déplacements axiaux des conduites 2. Ce jeu j est compris entre 5 mm et 10 mm et est préférentiellement de l'ordre de 8 mm.

Ainsi, les portions mobiles 2' et, par conséquent, les premières extrémités 2a de raccordement des conduites 2 sont déplacées vers le haut et rapprochées de la première extrémité longitudinale 1a de raccordement du pylône 1 à la turbomachine T.

Dans une dernière étape d), la au moins une conduite 2 est raccordée à la turbomachine T. Plus précisément, chaque conduite 2 est raccordée, par l'intermédiaire de sa première extrémité 2a de raccordement, à une conduite analogue de la turbomachine T.

Dans le procédé selon l'invention, la turbomachine T est fixée au pylône 1 avant ou après l'étape c).

On note que, dans le présent exposé, il est fait référence à un pylône de banc d'essai, il est toutefois noté que la présente invention pourrait être appliquée à un pylône d'aéronef.

## Revendications

1. Pylône (1) de support d'une turbomachine (T) d'aéronef, en particulier pour un banc d'essai, le pylône ayant une forme générale allongée le long d'un axe (A-A) et comportant, à une première extrémité longitudinale (1a), des premiers organes de fixation à une turbomachine et, à une seconde extrémité longitudinale (1b), des seconds organes de fixation à une embase (E), le pylône étant traversé par au moins une conduite (2) de fluide comportant une première extrémité (2a) de raccordement à la turbomachine (T) et une seconde extrémité (2b) de raccordement à un circuit (C) d'alimentation en fluide, **caractérisé en ce que** la au moins une conduite (2) comprend une portion (2') mobile en translation le long de l'axe (A-A) de façon à pouvoir ajuster la position le long de l'axe (A-A) de la première extrémité (2a) de raccordement par rapport à la première extrémité longitudinale (1a).

2. Pylône (1) selon la revendication précédente, **caractérisé en ce que** la au moins une conduite (2) comprend une portion flexible (2c) située, par exemple, au niveau de la seconde extrémité de raccordement (2b) à l'embase (E).

3. Pylône (1) selon l'une des revendications précédentes, dans lequel la portion mobile (2') traverse un orifice (3) d'une platine (4) sensiblement perpendiculaire audit axe (A-A) et porte deux bagues fixes (5, 6) dont une première (5) est située d'un coté de la platine (4) et forme une butée et dont une seconde (6) est située de l'autre coté de la platine, un ressort (7) de compression prenant appui sur la seconde bague (6) et sur la platine (4) pour solliciter l'éloignement de la seconde bague (6) de la platine (4).

4. Pylône (1) selon la revendication précédente, dans lequel la platine (4) est reliée à un corps (1c) de pylône par des moyens de guidage en translation le long de l'axe (A-A).

5. Pylône (1) selon la revendication précédente, dans lequel les moyens de guidage en translation comportent deux tiges télescopiques (10) dont les extrémités sont respectivement fixées à la platine (4) et au corps (1c) du pylône.

6. Pylône (1) selon la revendication 4, dans lequel les moyens de guidage en translation comportent au moins une vis sans fin.

7. Pylône (1) selon l'une des revendications 3 à 6, dans lequel la platine (4) est reliée à ou comprend au moins une poignée (9) de déplacement de la platine et donc d'ajustement de la position de la portion mobile (2').

8. Pylône (1) selon l'une quelconque des revendications 3 à 7, dans lequel le pylône comprend plusieurs conduites (2) de fluide et la platine (4) comprend plusieurs orifices (3) traversés par les conduites (2).

9. Pylône (1) selon l'une des revendications précédentes, dans lequel il comprend des moyens de verrouillage de la portion mobile (2') dans au moins une position le long de l'axe (A-A).

10. Procédé de montage d'une turbomachine (T) d'aéronef sur un pylône (1) selon l'une quelconque des revendications 1 à 9, comprenant :
a) une étape de déplacement de la portion mobile (2') des conduites (2) en direction de la seconde extrémité longitudinale (1b) du pylône (1) de façon à ce que la première extrémité (2a) de raccordement soit située à une première distance prédéterminée (D₁) de la première extrémité longitudinale (1a) du pylône (1),
b) une étape d'accostage de la turbomachine sur la première extrémité longitudinale (1a),
c) une étape de déplacement de la portion mobile (2') des conduites (2) en direction de la première extrémité longitudinale (1a) du pylône (1) de façon à ce que la première extrémité (2a) de raccordement soit située à une seconde distance prédéterminée (D₂) de la première extrémité (1a) longitudinale, la première distance prédéterminée (D₁) étant supérieure à la seconde distance prédéterminée (D₂), et
d) une étape de raccordement de la au moins une conduite à la turbomachine,
la turbomachine étant fixée au pylône avant l'étape c) ou après l'étape c) ou d).

## Patentansprüche

1. Stützmast (1) einer Turbomaschine (T) eines Luftfahrzeugs, insbesondere für einen Prüfstand, wobei der Mast eine allgemeine entlang einer Achse (A-A) gestreckte Form aufweist und an einem ersten Längsende (1a) erste Organe zum Befestigen an einer Turbomaschine umfasst, und an einem zweiten Längsende (1b) zweite Organe zum Befestigen an einem Sockel (E), wobei der Mast von mindestens einer Fluidleitung (2) durchquert ist, die ein erstes Ende (2a) zum Anschließen an die Turbomaschine (T) und ein zweites Ende (2b) zum Anschließen an einem Fluidversorgungskreislauf (C) umfasst, **dadurch gekennzeichnet, dass** die mindestens eine Leitung (2) einen Abschnitt (2') umfasst, der in Verschiebung entlang der Achse (A-A) derart beweglich ist, dass er die Position entlang der Achse (A-A) des ersten Endes (2a) zum Anschließen in Bezug auf das erste Längsende (1a) einstellen kann.

2. Mast (1) nach dem vorstehenden Anspruch, **dadurch gekennzeichnet, dass** mindestens eine Leitung (2) einen biegsamen Abschnitt (2c) umfasst, der zum Beispiel in dem Bereich des zweiten Endes (2b) zum Anschließen an dem Sockel (E) liegt.

3. Mast (1) nach einem der vorstehenden Ansprüche, wobei der bewegliche Abschnitt (2') eine Öffnung (3) einer Platte (4) durchquert, die im Wesentlichen zu der Achse (A-A) senkrecht ist und zwei stationäre Ringe (5, 6) trägt, von welchen der erste (5) auf einer Seite der Platte (4) liegt und einen Anschlag bildet, und von welchen der zweite (6) auf der anderen Seite der Platte liegt, wobei eine Druckfeder (7) auf dem zweiten Ring (6) und auf der Platte (4) anliegt, um das Beabstanden des zweiten Rings (6) der Platte (4) vorzuspannen.

4. Mast (1) nach dem vorstehenden Anspruch, wobei die Platte (4) mit einem Mastkörper (1c) durch Verschiebungsführungsmittel entlang der Achse (A-A) verbunden ist.

5. Mast (1) nach dem vorstehenden Anspruch, wobei die Verschiebungsführungsmittel zwei teleskopische Schäfte (10) umfassen, deren Enden jeweils an der Platte (4) und an dem Körper (1c) des Mastes befestigt sind.

6. Mast nach Anspruch 4, wobei die Verschiebungsführungsmittel mindestens eine Endlosschraube umfassen.

7. Mast (1) nach einem der Ansprüche 3 bis 6, wobei die Platte (4) mit mindestens einem Griff (9) zum Verlagern der Platte und daher Einstellen der Position des beweglichen Abschnitts (2') verbunden ist oder einen umfasst.

8. Mast (1) nach einem der Ansprüche 3 bis 7, wobei der Mast mehrere Fluidleitungen (2) umfasst, und die Platte (4) mehrere Öffnungen (3), die von den Leitungen (2) durchquert werden, umfasst.

9. Mast (1) nach einem der vorstehenden Ansprüche, der Verriegelungsmittel des beweglichen Abschnitts (2') in mindestens einer Position entlang der Achse (A-A) umfasst.

10. Montageverfahren einer Turbomaschine (T) eines Luftfahrzeugs auf einem Mast (1) nach einem der Ansprüche 1 bis 9, das umfasst:
a) einen Verlagerungsschritt des beweglichen Abschnitts (2') der Leitungen (2) in Richtung des zweiten Längsendes (1b) des Mastes (1) derart, dass das erste Ende (2a) zum Anschließen in einem ersten vorbestimmten Abstand (D₁) von dem ersten Längsende (1a) des Mastes (1) liegt,
b) einen Andockschritt der Turbomaschine auf dem ersten Längsende (1a),
c) einen Verlagerungsschritt des beweglichen Abschnitts (2') der Leitungen (2) in Richtung des ersten Längsendes (1a) des Mastes (1) derart, dass das erste Ende (2a) zum Anschließen in einem zweiten vorbestimmten Abstand (D₂) von dem ersten Längsende (1a) liegt, wobei der erste vorbestimmte Abstand (D₁) größer ist als der zweite vorbestimmte Abstand (D₂), und
d) einen Anschlussschritt der mindestens einen Leitung an der Turbomaschine,
wobei die Turbomaschine an dem Mast vor dem Schritt c) oder nach dem Schritt c) oder d) befestigt wird.

## Claims

1. A pylon (1) for supporting an aircraft turbomachine (T), in particular for a test bench, the pylon having a generally elongated shape along an axis (A-A) and comprising, at a first longitudinal end (1a), first members for fixing to a turbomachine and, at a second longitudinal end (1b), second members for fixing to a base plate (E), the pylon being traversed by at least one fluid pipe (2) comprising a first end (2a) for connecting to the turbomachine (T) and a second end (2b) for connecting to a fluid supply circuit (C), **characterized in that** the at least one pipe (2) comprises a movable portion (2') movable in translation along the axis (A-A) so as to be able to adjust the position along the axis (A-A) of the first connecting end (2a) relative to the first longitudinal end (1a).

2. The pylon (1) according to the preceding claim, **characterized in that** the at least one pipe (2) comprises a flexible portion (2c) located, for example, at the second end (2b) for connecting to the base plate (E).

3. The pylon (1) according to one of the preceding claims, wherein the movable portion (2') passes through an orifice (3) of a plate (4) substantially perpendicular to said axis (A-A) and carries two fixed rings (5, 6) of which a first (5) is located on one side of the plate (4) and forms a stop and of which a second (6) is located on the other side of the plate, a compression spring (7) bearing on the second ring (6) and on the plate (4) to bias the second ring (6) to move away from the plate (4).

4. The pylon (1) according to the preceding claim, wherein the plate (4) is connected to a pylon body (1c) by means for guiding in translation along the axis (A-A).

5. The pylon (1) according to the preceding claim, wherein the translation guiding means comprise two telescopic rods (10) of which the ends are respectively fixed to the plate (4) and to the body (1c) of the pylon.

6. The pylon (1) according to claim 4, wherein the translation guiding means comprise at least one worm screw.

7. The pylon (1) according to one of claims 3 to 6, wherein the plate (4) is connected to or comprises at least one handle (9) for moving the plate and thus for adjusting the position of the movable portion (2').

8. The pylon (1) according to any one of claims 3 to 7, wherein the pylon comprises a plurality of fluid pipes (2) and the plate (4) comprises a plurality of orifices (3) traversed by the pipes (2).

9. The pylon (1) according to one of the preceding claims, wherein it comprises means for locking the movable portion (2') in at least one position along the axis (A-A).

10. A method of mounting an aircraft turbomachine (T) on a pylon (1) according to any of claims 1 to 9, comprising:
a) a step of moving the movable portion (2') of the pipes (2) towards the second longitudinal end (1b) of the pylon (1) so that the first connecting end (2a) is located at a first predetermined distance (D₁) from the first longitudinal end (1a) of the pylon (1),
b) a step of docking the turbomachine on the first longitudinal end (1a),
c) a step of moving the movable portion (2') of the pipes (2) towards the first longitudinal end (1a) of the pylon (1) so that the first connecting end (2a) is located at a second predetermined distance (D₂) from the first longitudinal end (1a), the first predetermined distance (D₁) being greater than the second predetermined distance (D₂), and
d) a step of connecting the at least one pipe to the turbomachine,
the turbomachine being fixed to the pylon before step c) or after step c) or d).
